# EUROPÄISCHE PATENTSCHRIFT

(11) **EP 1 091 643 B1**
(45) Veröffentlichungstag und Bekanntmachung des Hinweises auf die Patenterteilung: **10.04.2002**
(21) Anmeldenummer: 99942755.2
(22) Anmeldetag: 30.06.1999
(51) Int. Cl.: A01K 11/00

(54) **VERFAHREN ZUM NACHWEIS DER ABSTAMMUNG UND/ODER ZUR IDENTIFIZIERUNG VON TIEREN ODER VON BIOLOGISCHEM MATERIAL**
METHOD FOR DETERMINING THE ORIGIN OF AND/OR IDENTIFYING ANIMALS OR BIOLOGICAL MATERIAL
PROCEDE POUR DETERMINER L'ORIGINE ET/OU L'IDENTITE D'ANIMAUX OU D'UN MATERIAU BIOLOGIQUE

(30) Priorität: 30.06.1998 DE 19829034
(43) Veröffentlichungstag der Anmeldung: 18.04.2001
(73) Patentinhaber: Generatio GmbH, 69115 Heidelberg (DE)
(72) Erfinder: MANZ, Eberhard, D-60121 Heidelberg (DE)
(74) Vertreter: Schohe, Stefan
(86) Internationale Anmeldenummer: DE9901937
(87) Internationale Veröffentlichungsnummer: WO0001227

(56) Entgegenhaltungen:
- EP-A- 0 299 557
- EP-A- 0 307 335
- EP-A- 0 646 313
- EP-A- 0 941 655
- DE-A- 19 629 531
- US-A- 4 475 481
- PATENT ABSTRACTS OF JAPAN vol. 1998, no. 11, 30. September 1998 (1998-09-30) & JP 10 151125 A (CORP MIYUKI:KK;ATSUKUSU:KK), 9. Juni 1998 (1998-06-09)
- HELLMAN M E: "The mathematics of public-key cryptography" SCIENTIFIC AMERICAN,US,SCIENTIFIC AMERICAN INC. NEW YORK, Bd. 241, Nr. 2, Seite 130-139-139 XP002097245 ISSN: 0036-8733

## Beschreibung

Die Erfindung betrifft ein Verfahren zum Nachweis der Abstammung und/oder zur Identifizierung von Tieren oder von biologischem Material. Dabei kann das biologische Material von Tieren oder von jeglichen Nukleinsäure als Erbsubstanz tragenden Organismen stammen.

Bei der Registrierung, beim Kauf oder bei der Zucht von Tieren kommt es häufig darauf an, die Identität eines Tieres eindeutig festzustellen, die Abstammung des Tieres nachzuweisen oder den Eigentümer zu ermitteln. Im Bereich der Tierzucht sind zum Nachweis der Abstammung und der Leistung von Zuchttieren sogenannte Zuchtbücher oder Zuchtregister bekannt, welche von anerkannten Züchtervereinigungen geführt werden. Darüber hinaus sind Tierpässe bekannt, welche bestimmte Daten jeweils eines Tieres enthalten. Zu diesen Daten zählen beispielsweise körperliche Merkmale, Ergebnisse von Bluttests, die Abstammung oder phänotypische Besonderheiten. Als nachteilig erweist sich hierbei, daß die Anzahl der Informationen gering, der Zugriff auf die Daten begrenzt und ihre Kontrolle schwierig ist. Insbesondere besteht bei allgemein zugänglichen Registern stets die Gefahr von Manipulationen durch die Benutzer.

Bei biologischem Material von Tieren oder Organismen, wie beispielsweise Zellproben oder Kulturen von Mikroorganismen besteht der Nachteil, daß ihre Identität häufig nicht nachgeprüft werden kann, da keine charakteristischen Daten vorhanden sind.

DE 196 29 531 A1 offenbart eine elektronische Ohrmarke für Tiere, auf welcher biologische Daten, wie Alter und Abstammung, die den Wert eines Tieres entscheidend mitbestimmen, gespeichert sind. Gemäß dieser Druckschrift wird die Authentizität der gespeicherten Daten dadurch gewährleistet, daß diese Ohrmarke untrennbar mit dem Tier verbunden wird und eine Sicherheitseinrichtung vorgesehen wird, welche bewirkt, daß die gespeicherten Daten bei Zerstörung der Befestigungseinheit gelöscht werden. Zur meiteren Datensicherung kann ein Zugriffscode, wie ein Paßwort oder eine Kennziffer, zur Gewährung eines Zugriffs auf die gespeicherten Daten vorgesehen sein.

Die Erfindung löst die oben genannten Probleme durch ein Verfahren nach Anspruch 1 bzw. 32, einen Datenträger nach Anspruch 38 bzw. ein Computersystem nach Anspruch 41.

Die Erfindung kann vorsehen, daß die genetischen Informationen von mehreren Tieren oder von biologischem Material von mehreren Tieren oder Organismen bestimmt und auf einem. Speichermedium als Referenzdatensätze abgespeichert werden und
daß die genetische Information oder Teile der genetischen Information des zu identifizierenden Tieres oder des zu identifizierenden biologischen Materials mit einem Referenzdatensatz oder mehreren Referenzdatensätzen verglichen werden.

Die Erfindung kann auch vorsehen, daß in den Referenzdatensätzen zusätzlich Merkmale oder Eigenschaften der Tiere oder des biologischen Materials abgespeichert werden.

Die Erfindung kann auch vorsehen, daß die aus den genetischen Informationen herleitbaren Merkmale oder Eigenschaften ermittelt und im Referenzdatensatz abgespeichert werden.

Die Erfindung kann auch vorsehen, daß in den Referenzdatensätzen photographische Aufnahmen der Tiere abgespeichert werden.

Die Erfindung kann auch vorsehen, daß es sich bei dem biologischen Material um Embryonen, Samen- oder Eizellen von Tieren handelt.

Die Erfindung kann auch vorsehen, daß es sich bei dem biologischen Material um Blut- oder Gewebeproben von Tieren oder um Zellkulturzellen oder um Mikroorganismen handelt.

Die Erfindung kann auch vorsehen, daß die Referenzdatensätze bei einer zentralen Stelle abgespeichert werden.

Die Erfindung kann auch vorsehen, daß die Referenzdatensätze bei der zentralen Stelle verschlüsselt werden.

Die Erfindung kann auch vorsehen, daß als Schlüssel die jeweilige genetische Information verwendet wird. Die jeweilige genetische Information kann Teil des Schlüssels sein. Es kann auch vorgesehen sein, daß die jeweilige genetische Information Bestandteil eines elektronischen Zertifikates ist, welches den Schlüssel einem individuellen Tier, das durch die besagte genetische Information eindeutig spezifiziert ist, eindeutig zuweist und von einer Zertifizierungsstelle ausgestellt ist. Die Form eines solchen Zertifikates kann sich weitgehend an der Form eines Zertifikates orientieren, das zur Authentifizierung eines öffentlichen Schlüssels im Rahmen des Gesetzes zur digitalen Signatur ausgestellt wird. Es enthält zumindest die besagte genetische Information, welche eine eindeutige Zuordnung zu einem individuellen Tier zuläßt, den dieser Information bzw. diesem individuellen Tier zugewiesenen Schlüssel, bei einer asymmetrischen Verschlüsselung den öffentlichen Schlüssel, sowie eine digitale Unterschrift der Zertifizierungsstelle, welche beglaubigt, daß die Zuordnung tatsächlich authentisch ist.

Die Erfindung kann auch vorsehen, daß zum Abrufen eines Referenzdatensatzes eine Chipkarte verwendet wird.

Die Erfindung kann auch vorsehen, daß zum Abrufen eines Referenzdatensatzes ein Paßwort oder eine andere Information zum Identifizieren eines Benutzers eingegeben wird.

Die Erfindung kann auch vorsehen, daß anhand der genetischen Informationen und gegebenenfalls weiteren Informationen der Referenzdatensätze Paarungsvorschläge für Züchtungen ermittelt werden.

Die Erfindung kann auch vorsehen, daß das die Referenzdaten enthaltende Speichermedium in eine vom Tier getragene Erkennungsmarke integriert wird.

Die Erfindung kann auch vorsehen, daß die genetische Information der Referenzdatensätze durch eine mit dem Speichermedium verbundene Ausgabevorrichtung in Form eines Säulendiagramms angezeigt wird.

Die verschlüsselte Nachricht, welche die Identifikationsdaten bilden, kann der genetischen Information dadurch zugeordnet sein, daß eine Nachricht, vorzugsweise bestimmten Inhaltes, mit einem Code verschlüsselt ist, welcher der genetischen Information und damit dem individuellen Tier eindeutig zugeordnet ist, und/oder dadurch, daß die verschlüsselte Nachricht eine Information enthält, welche in einer eindeutigen vorgegebenen Beziehung zu der besagten genetischen Information steht und im einfachsten Fall diese Information selbst sein kann. Beide Möglichkeiten können kombiniert werden. Im ersten Fall kann die vorgegebene Beziehung dadurch überprüft werden, daß die Nachricht mit dem dem Tier individuell zugeordneten Schlüssel entschlüsselt wird. Ist eine erfolgreiche Entschlüsselung möglich, ist nachgewiesen, daß die Identifikationsdaten tatsächlich der besagten genetischen Information zugeordnet sind. Im zweiten Fall wird mit einem Schlüssel, der bei einer vertrauenswürdigen Stelle hinterlegt ist bzw. nur vertrauenswürdigen Benutzern zugänglich gemacht wird, die verschlüsselte Nachricht entschlüsselt und anhand des Inhalts der Nachricht überprüft, ob diese Daten bzw. diese Nachricht zu einem bestimmten Tier gehört. Werden beide Verfahren kombiniert, erfolgt eine Verifizierung der Zuordnung zu der genetischen Information bzw. zu dem Tier in doppelter Weise, zum einen durch die erfolgreiche Entschlüsselung und zum anderen durch den Inhalt der entschlüsselten Nachricht.

Das erfindungsgemäße Verfahren kann insbesondere die folgenden Schritte umfassen:
- Speichern von genetischen Informationen auf einem Datenträger, welcher das Tier bzw. das Material eindeutig identifizieren, in Verbindung mit Identifikationsdaten, die eine verschlüsselte Nachricht enthalten, die in einer eindeutigen Beziehung zu den genetischen Informationen steht,
- Aufrufen der Identifikationsdaten durch eine verschlüsselte Nachricht, die in eindeutiger Beziehung zu den genetischen Informationen steht,
- Überprüfen der Identifikationsdaten dahingehend, ob die mit der Nachricht übermittelten genetischen Informationen den gespeicherten genetischen Informationen entsprechen bzw. die gespeicherte verschlüsselte Nachricht der gesendeten verschlüsselten Nachricht entspricht,
- Ausgabe der genetischen Informationen, wenn eine Übereinstimmung festgestellt wurde und damit das Tier bzw. das Material eindeutig identifiziert wurde.

Die Erfindung kann auch vorsehen, daß die genetischen Informationen von einem oder mehreren Tieren oder von biologischem Material von einem oder mehreren Tieren oder Organismen bestimmt und auf einem Speichermedium als Referenzdatensätze abgespeichert werden.

Die Referenzdatensätze enthalten die Identifikationsdaten sowie gegebenenfalls weitere Daten betreffend das jeweilige Tier und bilden somit gewissermaßen ein elektronisches Registerblatt, auf dem die das Tier betreffenden Daten eingetragen sind und das durch die Identifikationsdaten eindeutig dem individuellen Tier zugeordnet ist.

Die Erfindung kann auch vorsehen, daß auf dem Datenträger den Identifikationsdaten zugeordnet weitere Daten betreffend das zu identifizierende Tier bzw. das zu identifizierende biologische Material gespeichert sind. Dabei kann insbesondere vorgesehen sein, daß die verschlüsselten Identifikationsdaten einen Zeiger oder eine anderweitige Information über den Speicherort der besagten weiteren Daten enthalten, so daß diese Information, d. h. die Zuordnung eines bestimmten Speicherbereichs zu einem bestimmten Tier, ohne Kenntnis des Schlüssels nicht verändert werden kann. Ein Versuch, einem bestimmten Tier einen anderen Datensatz zuzuordnen, würde daher beim Entschlüsseln der Identifikationsdaten auffallen, da sich entweder kein vernünftiger Klartext ergibt oder die entschlüsselte Information über den Speicherort bzw. den Zeiger zu den gespeicherten Daten betreffend das Tier nicht richtig ist. Die Erfindung kann auch vorsehen, daß die Identifikationsdaten eine verschlüsselte Nachricht enthalten, welche mit einem dem individuellen Tier oder Material eindeutig zugeordneten Code verschlüsselt ist.

Die Erfindung kann auch vorsehen, daß die verschlüsselte Nachricht den Wert einer Einwegfunktion (Hash) enthält, der sich ergibt, wenn diese Einwegfunktion auf weitere auf dem Datenträger gespeicherte Daten betreffend das zu identifizierende Tier bzw. das zu identifizierende biologische Material angewendet wird.

Die Erfindung kann auch vorsehen, daß eine verschlüsselte Nachricht eine das Tier bzw. das Material eindeutig identifizierende genetische Information umfaßt.

Die Erfindung kann auch vorsehen, daß die Identifikationsdaten verschlüsselte Daten betreffend den Speicherort und/oder den Inhalt von weiteren Daten betreffend das den Identifikationsdaten zugeordnete Tier umfassen.

Die Erfindung kann auch vorsehen, daß die Identifikationsdaten eine Nachricht umfassen, die mit einem Code verschlüsselt wird, welcher auf der Grundlage einer Ziffernfolge in einer vorbestimmten eindeutigen Weise generiert ist, welche einer genetischen Information, welche das Tier bzw. das Material eindeutig identifiziert, eindeutig zugeordnet ist.

Die Erfindung kann auch vorsehen, daß die Ziffemfolge zumindest einen Teil des Codes bildet.

Die Erfindung kann auch vorsehen, daß der Schlüssel ein symmetrischer Schlüssel ist.

Die Erfindung kann auch vorsehen, daß die Information auf der Grundlage eines asymmetrischen Schlüsselpaares verschlüsselt wird, wobei zumindest ein Teil des öffentlichen Schlüssels in einer vorgegebenen Beziehung zu der das Tier bzw. das Material identifizierenden genetischen Information steht.

Die Erfindung kann auch vorsehen, daß der öffentliche Schlüssel aus einem für das Tier bzw. das Material spezifischen Anteil und einem benutzerspezifischen Anteil besteht.

Die Erfindung kann auch vorsehen, daß die Identifikationsdaten zusätzlich mit einem benutzerspezifischen Schlüssel verschlüsselt werden.

Die Erfindung kann auch vorsehen, daß zumindest ein Teil der Daten auf dem Datenträger, welche den Identifikationsdaten zugeordnet sind, mit einem Code verschlüsselt sind, der verschieden von dem Code ist, mit welchem die Identifikationsdaten verschlüsselt sind.

Die Erfindung kann auch vorsehen, daß der Schlüssel zum Entschlüsseln der in den Identifikationsdaten enthaltenen Nachricht auf einem Träger eines Chips zum Kommunizieren mit einer Datenverarbeitungsanlage über eine Schnittstelle, z. B. ein Lesegerät, insbesondere auf einer Chipkarte, gespeichert ist.

Unter einem Chip im Sinne dieser Anmeldung soll allgemein jeder elektronische oder optische Baustein verstanden werden, welcher zumindest eine Speicherfunktion hat und gegebenenfalls auch logische Funktionen ausführen kann und eine Schnittstelle zur Kommunikation mit einem Rechnersystem, z. B. über ein Lesegerät oder über eine optische Schnittstelle, aufweist. Insbesondere sollen hiervon auch holographische Speichereinheiten mit umfaßt werden. In dem Chip können außer den Identifikationsdaten sowie gegebenenfalls einem elektronischen Zertifikat einer Zertifizierungsstelle auch weitere das Tier betreffende Daten gespeichert sein, z. B. Impfdaten, Abstammungsdaten etc., so daß der Chip oder ein Träger, auf dem dieser Chip installiert ist, z. B. eine Chipkarte, als Tierausweis fungiert, auf dem alle für das Tier relevanten Daten gespeichert sind.

Die Erfindung kann auch vorsehen, daß der Chip eine Einrichtung zum Entschlüsseln von Nachrichten aufweist.

Die Erfindung kann auch vorsehen, daß der die Nachricht der Identifikationsdaten codierende Schlüssel ein asymmetrischer Schlüssel ist, der zugehörige private Schlüssel auf dem Chip gespeichert ist und der Chip eine Einrichtung zum Verschlüsseln von Nachrichten mit dem privaten Schlüssel aufweist.

Die Erfindung kann auch vorsehen, daß der Chip eine Schnittstelle zum Eingeben von digitalisierter genetischer Information und eine Einrichtung zum Überprüfen der Zuordnung des gespeicherten Codes zu einer eingegebenen digitalisierten genetischen Information enthält.

Die Erfindung kann auch vorsehen, daß die Vergleichseinrichtung die eingegebene digitalisierte genetische Information mit einem abgespeicherten Wert für diese Information vergleicht und ein Ausgangssignal abgibt, welches anzeigt, ob eine Übereinstimmung vorliegt oder nicht.

Die Erfindung kann auch vorsehen, daß die Vergleichseinrichtung auf der Grundlage der eingegebenen digitalisierten genetischen Information und einer abgespeicherten Zuordnung einer digitalisierten genetischen Information, welche das Tier bzw. das Material eindeutig identifiziert, zu dem abgespeicherten Schlüssel einen der eingegebenen Information zugeordneten Schlüssel bestimmt, den so bestimmten Schlüssel mit dem abgespeicherten Schlüssel vergleicht und ein Ausgangssignal abgibt, welches anzeigt, ob der aufgrund der eingegebenen Information bestimmte Schlüssel mit dem abgespeicherten Schlüssel übereinstimmt oder nicht.

Die Erfindung kann auch vorsehen, daß in dem Chip einen oder mehrere Benutzer identifizierende Informationen gespeichert sind und die Entschlüsselungs- bzw. Verschlüsselungseinrichtung nur dann aktiviert wird, wenn über eine Eingabeeinrichtung eine für einen Benutzer als Identifizierung gespeicherte Information eingegeben wird. Die betreffende Information kann z. B, ein Paßwort sein, aber auch z. B. ein Fingerabdruck, das Abbild der Netzhaut, ein Sprachmuster zur Spracherkennung oder dgl.

Die Erfindung kann auch vorsehen, daß der Code zum Entschlüsseln von codierter Information, die in den Identifikationsdaten enthalten ist, in einem zentralen Rechner gespeichert ist.

Die Erfindung kann auch vorsehen, daß der Rechner aufgrund einer eingegebenen oder vorgegebenen genetischen Information den zugehörigen Schlüssel bestimmt und diesen Schlüssel auf die Identifikationsdaten anwendet.

Der Rechner kann dabei als reiner Entschlüsselungsserver fungieren, d. h. die jeweiligen Daten sind anderweitig, in der Regel dezentral, gespeichert, wobei an den jeweiligen Speicherorten der zur Entschlüsselung notwendige Schlüssel nicht vorhanden ist und nur auf dem besagten zentralen Rechner eine Entschlüsselung stattfindet, wobei der Zentralrechner die verschlüsselten Daten empfängt und die entschlüsselten Daten zurücksendet. Es kann auch vorgesehen sein, daß die entsprechenden tierbezogenen Daten ebenfalls auf dem zentralen Rechner gespeichert sind. In diesem Fall dient der Schlüssel, welcher die Identifikationsdaten entschlüsselt, im wesentlichen zum Nachweis, daß die Zuordnung der Daten in dem Rechner zu einem bestimmten Tier bzw., wenn eine Einwegfunktion verwendet wird oder die gesamten Daten verschlüsselt sind, daß die Daten insgesamt nicht manipuliert wurden. Dagegen ist die Kommunikation zwischen dem Rechner und dem Benutzer bei dieser Variante nicht gegen Manipulationen gesichert oder wird durch ein standardmäßiges Verfahren zum Herstellen einer sicheren Verbindung zwischen einem Server und einem Benutzer abgesichert.

Die Erfindung kann auch vorsehen, daß der zentrale Rechner nach der Entschlüsselung überprüft, ob vorgegebene Zeichenfolgen in dem entschlüsselten Klartext vorhanden sind und ein entsprechendes Ausgangssignal an einen Benutzer abgibt.

Die Erfindung kann auch vorsehen, daß die auf einem von dem zentralen Rechner getrennten Datenträger gespeicherte tierbezogene Information sowie gegebenenfalls eine vorbestimmte, das Tier bzw. das Material eindeutig identifizierende genetische Information zu dem zentralen Rechner übermittelt wird, wo sie entschlüsselt wird.

Die Erfindung kann auch vorsehen, daß der Datenträger mit den auf das Tier bzw. das Material bezogenen Daten auf einem zentralen Rechner installiert ist.

Die Erfindung kann auch vorsehen, daß zumindest ein Teil der Daten zugriffsgeschützt ist und die Zugriffsberechtigung für verschiedene Benutzer des zentralen Rechners verschieden ist.

Die Erfindung kann auch vorsehen, daß für einen Teil der Benutzer ein Zugriff auf zumindest einen Teil der gespeicherten Daten nur dann möglich ist, wenn gleichzeitig ein vorbestimmter weiterer Benutzer, z. B. der Tierbesitzer, bei dem zentralen Rechner angemeldet ist.

Die Erfindung kann auch vorsehen, daß ein Zugriff auf zumindest einen Teil der gespeicherten Daten nur dann möglich ist, wenn der Rechner anhand der auf einem Chip, insbesondere auf einer Chipkarte, gespeicherten Daten die Zugriffsberechtigung überprüft hat. Dies kann insbesondere auch für den zweiten Benutzer gelten, der gemäß der vorangehend genannten Ausführungsform angemeldet sein muß.

Die Erfindung kann auch vorsehen, daß der Rechner so eingerichtet ist, daß ein Schreiben von Benutzern in die abgespeicherten, auf das Tier bzw. das Material bezogenen Daten nur zusammen mit einer digitalen Signatur des Benutzers möglich ist.

Die Erfindung kann auch vorsehen, daß ein tierspezifisches Paar von asymmetrischen Schlüssein zum Austausch eines Sitzungsschlüssels für die Kommunikation eines Benutzers mit dem zentralen Rechner verwendet wird.

Die Erfindung kann auch vorsehen, daß die Identifikationsdaten eine verschlüsselte Nachricht enthalten, welche mit einem dem individuellen Tier eindeutig zugeordneten Schlüssel verschlüsselt ist.

Die Erfindung kann auch vorsehen, daß die verschlüsselte Nachricht den Wert einer Einwegfunktion (Hash) enthält, der sich ergibt, wenn diese Einwegfunktion auf weitere auf dem Datenträger gespeicherte Daten betreffend das zu identifizierende Tier bzw. das zu identifizierende biologische Material angewendet wird.

Die Erfindung kann auch vorsehen, daß die Identifikationsdaten eine Nachricht umfassen, die mit einem Code verschlüsselt ist, welcher auf der Grundlage einer Ziffernfolge in einer vorbestimmten eindeutigen Weise generiert ist, welche einer genetischen Information, welche das Tier bzw. das Material eindeutig identifiziert, eindeutig zugeordnet ist.

Die Erfindung kann auch vorsehen, daß der Schlüssel ein symmetrischer Schlüssel ist.

Die Erfindung kann auch vorsehen, daß die Information auf der Grundlage eines asymmetrischen Schlüsselpaares verschlüsselt ist, wobei zumindest ein Teil des öffentlichen Schlüssels in einer vorgegebenen Beziehung zu der genetischen Information steht.

Die Erfindung kann auch vorsehen, daß der Chip einen Prozessor zum Entschlüsseln von Nachrichten mit dem gespeicherten Schlüssel aufweist.

Die Erfindung kann auch vorsehen, daß der Chip eine Schnittstelle zum Eingeben von digitalisierter genetischer Information und eine Vergleichseinrichtung zum Überprüfen der Zuordnung des gespeicherten Codes zu einer eingegebenen digitalisierten genetischen Information enthält.

Das erfindungsgemäße Verfahren hat den Vorteil, daß zur Identifizierung und zum Nachweis der Abstammung die genetischen Informationen der Tiere oder des biologischen Materials herangezogen werden. Die genetischen Informationen werden beispielsweise aus einer Blutoder Gewebeprobe der Tiere oder aus deren Ei- oder Samenzellen nach bekannten Methoden bestimmt. Als Gewebeprobe ist zum Beispiel eine Haarwurzel ausreichend. Träger der genetischen Information sind die Ribonukleinsäuren (RNS), welche die stoffliche Substanz der Gene darstellen und die Fähigkeit zur identischen Verdopplung besitzen. Die genetische Information kann auf verschiedene Arten zusammengefaßt oder auch standardisiert werden. Zur Darlegung bestimmter Eigenschaften können die dafür kodierten Gene oder genetische Marker verwendet werden. Um den Zugriff auf die genetische Information zu gewährleisten, wird diese in Form von Referenzdatensätzen auf einem Speichermedium abgespeichert. Um die Identität eines Tieres festzustellen oder die Abstammung von Tieren oder von biologischem Material nachzuweisen oder zu überprüfen, werden die Referenzdatensätze vom Speichermedium abgerufen und mit bereits vorhandenen Daten verglichen. Bevor ein Benutzer auf den Referenzdatensatz zugreifen kann, muß er zunächst seine Berechtigung nachweisen. Dies kann beispielsweise durch Eingabe eines Paßwortes, eines Namens oder einer PIN erfolgen. Darüber hinaus kann die Berechtigung auch auf einer Chipkarte, beispielsweise einer SmartCard, abgespeichert sein. Der Benutzer kann jeweils nur denjenigen Referenzdatensatz abrufen, zu dem er die Berechtigung nachweisen kann. Alle anderen auf dem Speichermedium abgelegten Referenzdatensätze sind für ihn nicht zugänglich. Bei diesem Benutzer kann es sich beispielsweise um den Besitzer eines Tieres handeln. Er kann seine Berechtigung auch an Dritte weitergeben. Auf diese Weise kann beispielsweise der Käufer eines Tieres schnell und einfach nachprüfen, ob die von dem Verkäufer angegebenen Daten zu dem zum Kauf angebotenen Tier gehören. In diesem Fall wird die Berechtigung an den Kaufinteressenten zeitlich begrenzt. Werden vermißte Tiere wieder aufgefunden, so kann nachgeprüft werden, ob es sich um das gesuchte Tier handelt. In beiden Fällen können dem Tier Zellproben entnommen werden, um eine gewisse Anzahl genetischer Informationen daraus zu ermitteln. Aus dem Vergleich zwischen den ermittelten Informationen und den Referenzdatensätzen ergibt sich die Identität des Tieres. Mit Hilfe der genetischen Informationen kann außerdem die Abstammung der Tiere überprüft werden. Für die Tierzucht werden häufig den Tieren Samenzellen oder Eizellen entnommen und diese entsprechend aufbewahrt. Die in geeigneten Behältnissen gelagerten Geschlechtszellen stehen im Bedarfsfall zur Verfügung. Beim Kauf derartiger Geschlechtszellen kann der Käufer durch Entnahme einer Probe und dem Vergleich zwischen den aus der Probe ermittelten Daten und einem Referenzdatensatz die Abstammung der Geschlechtszellen ermitteln. Auf diese Weise können außerdem für ein optimales Zuchtergebnis geeignete Paarungsvorschläge ermittelt werden.

Die Gefahr von Manipulationen der Referenzdaten besteht bei diesem Verfahren nicht, da ein Abrufen der Daten nur durch Berechtigte möglich ist. Die Veränderung der Referenzdaten kann außerdem nur einer zentralen Stelle gestattet sein, so daß selbst Berechtigte die Daten nicht verändern können. Der Inhalt des Referenzdatensatzes liefert einen genetischen Fingerabdruck des betreffenden Tieres, des Organismus oder des biologischen Materials. Dieser erlaubt eine eindeutige Identifizierung und ist von jedem beliebigen Labor nachprüfbar.

Biologisches Material von Tieren oder Organismen kann zur Aufbewahrung oder Handhabung in geeigneten Behältnissen gelagert sein, welche mit einem Speichermedium für die genetischen Informationen des biologischen Materials versehen sind. Zur Überprüfung des Inhalts werden die aus einer Probe des biologischen Materials ermittelten genetischen Informationen mit den gespeicherten Daten verglichen.

Nach einer vorteilhaften Ausgestaltung der Erfindung werden in den Referenzdatensätzen zusätzlich Merkmale oder Eigenschaften der Tiere oder des biologischen Materials abgespeichert. Auf diese Weise entsteht eine direkte Verbindung zwischen den allgemeinen Merkmalen und Eigenschaften des betreffenden Tieres und der in den Referenzdaten enthaltenen genetischen Information, welche das Tier eindeutig identifiziert ("genetischer Fingerabdruck"). Dabei kann es sich z. B. um besondere Fähigkeiten des Tieres, um den Besitzer, um Vorfahren und Nachkommen, um Preise oder Auszeichnungen, um Wertangaben, um Angaben über allgemeine und besondere Fähigkeiten, um Ausbildungen, um Erbkrankheiten, sonstige Krankheiten, Impfungen oder tierärzliche Betreuungsdaten handeln. Der Einblick in den Referenzdatensatz erlaubt damit nicht nur die Kenntnisnahme der abstrakten genetischen Informationen, sondern ermöglicht außerdem das Abrufen charakteristischer Daten des Tieres oder des biologischen Materials. Auf diese Weise kann auch der Zusammenhang zwischen bestimmten genetischen Informationen und charakteristischen Merkmalen des Tieres oder des biologischen Materials untersucht, ausgewertet oder angegeben werden.

Nach einer weiteren vorteilhaften Ausgestaltung der Erfindung, werden die aus den genetischen Informationen herleitbaren Merkmale oder Eigenschaften ermittelt und in dem Referenzdatensatz abgespeichert. Bei den charakteristischen Merkmalen oder Eigenschaften des Tieres kann es sich nicht nur um solche handeln, die bei einer Untersuchung oder bei einer Beobachtung über einen längeren Zeitraum ermittelt wurden oder auf Erfahrungswerten beruhen, sondern auch um solche, die sich unmittelbar aus den genetischen Informationen ergeben. Sofern die genetischen Informationen in Form eines Referenzdatensatzes auf einem Speichermedium vorliegen, können bereits bekannte Gesetzmäßigkeiten oder auch neueste Erkenntnisse ausgenutzt werden, um auf schnelle und einfache Art und Weise die aus den genetischen Informationen resultierenden Merkmale anzugeben.

Nach einer weiteren vorteilhaften Ausgestaltung der Erfindung werden in den Referenzdatensätzen photographische Aufnahmen abgespeichert. Dies können insbesondere normale photographische Aufnahmen sein, welche das Aussehen des Tieres insgesamt zeigen, aber auch Ergebnisse bildgebender diagnostischer Verfahren (z. B. einer Ultraschalluntersuchtung, einer Röntgenuntersuchung, einer Endoskopie, einer Computertomographie), mit denen der körperliche Zustand des Tieres dokumentiert wird.

Nach einer weiteren vorteilhaften Ausgestaltung der Erfindung handelt es sich bei dem biologischen Material um Embryonen, Samen- oder Eizellen von Tieren. Diese werden, nachdem sie dem betreffenden Tier abgenommen worden sind, in geeignete Behältnisse abgefüllt und gekühlt gelagert. An dem Behältnissen können Beschriftungen oder elektronische Datenträger, z. B. Mikrochips oder sogenannte Smart Labels, vorgesehen sein, welchen die für den Inhalt des Behälters wesentlichen Daten enthalten. Bei den Smart Labels handelt es sich um sehr dünne Speichereinheiten mit einer Ein- und Ausgabeschnittstelle, die wie ein Transponder wirkt. Diese Smart Labels können die Dicke eines Blattes Papier haben und damit anstelle von Papieretiketten als "elektronische Etiketten" verwendet werden.

Der Zugriff auf die Referenzdaten ermöglicht ein Überprüfen der auf den Behältern angegebenen Daten insbesondere dann, wenn von den Samen- oder Eizellen eine Probe entnommen und daraus die genetische Information bestimmt wird.

Nach einer weiteren vorteilhaften Ausgestaltung der Erfindung handelt es sich bei den biologischen Material um Blut- oder Gewebeproben von Tieren, um Zellkulturzellen oder um Mikroorganismen. Diese können beispielsweise zu Prüf- oder Versuchszwecken gelagert werden. Eine Überprüfung der Probe ist in diesem Fall jederzeit möglich.

Nach einer weiteren vorteilhaften Ausgestaltung der Erfindung werden die Referenzdatensätze bei einer zentralen Stelle abgespeichert. Diese zentrale Stelle verwaltet und überwacht die Daten, so daß diese nicht durch Dritte manipuliert oder verfälscht werden können. Berechtigte können bei der zentralen Stelle auf die abgespeicherten Daten zugreifen. Die zentrale Stelle kann auch die betreffenden Berechtigungen vergeben.

Nach einer weiteren vorteilhaften Ausgestaltung der Erfindung werden die Referenzdatensätze bei der zentralen Stelle verschlüsselt. Dies erschwert den Zugriff von Unberechtigten auf die Daten und verhindert eine entsprechende Manipulation der Daten. So kann beispielsweise ein öffentlicher Schlüssel (public key) und ein privater Schlüssel (private key) zum Ver- und Entschlüsseln der Daten vorgesehen sein. Durch das Abrufen der Referenzdaten gibt der Benutzer seine Unterschrift zum Inhalt des Datensatzes, vergleichbar einer digitalen Signatur.

Nach einer weiteren vorteilhaften Ausgestaltung der Erfindung wird als Schlüssel die jeweilige genetische Information verwendet oder dem Schlüssel die jeweilige genetischen Information zugrundegelegt. So kann beispielsweise die aus der Probe des Tieres ermittelte Basenzahl mit einer lediglich bei der zentralen Stelle bekannten Kontrollzahl verrechnet und als privater Schlüssel verwendet werden.

Nach einer weiteren vorteilhaften Ausgestaltung der Erfindung wird die Berechtigung zum Abrufen eines Referenzdatensatzes auf einer Chipkarte, insbesondere auf einer SmartCard, abgespeichert. Um den Referenzdatensatz abzurufen muß die Chipkarte in ein hierfür vorgesehenes Lesegerät eingeführt werden. Erst wenn die Berechtigung nachgeprüft und erkannt wurde, erfolgt die Ausgabe der Referenzdaten. Der Nutzer der Karte erhält eine geeignete Software, mit Hilfe der er an seinem Computer auf die Referenzdaten zugreifen kann. Bei einem Datennetz besteht die Möglichkeit, Online auf die Referenzdaten zuzugreifen. Hierzu ist eine geeignete Datenverbindung zwischen der zentralen Stelle und dem Nutzer notwendig. Anstelle einer Chipkarte kann auch ein anderer Träger eines isolierten Chips mit einer Schnittstelle zur Kommunikation mit einem Rechner vorgesehen sein, z. B. in Form eines Armbandes, eines Schlüsselbundes oder eines anderen Gegenstandes, den der Benutzer am Körper tragen kann, wobei die Schnittstelle nicht notwendig elektronisch sein muß, sondern gegebenenfalls auch optisch funktionieren kann. Unter dem Begriff "Chip" im Rahmen dieser Anmeldung sollen nicht nur elektronische Halbleiterbausteine mit einer Speicherfunktion und einem eingebauten Mikroprozessor verstanden werden, sondern auch Speicherchips mit einer reinen Speicherfunktion oder andere, ähnlich dimensionierte Speicher - und/oder Logikeinheiten, beispielsweise holographische Speicher oder dergleichen. Dementsprechend ist auch mit einer "Chipkarte" bzw. einem "Chipträger" im Sinne dieser Anmeldung ein Träger bzw. eine Karte gemeint, welche einen Chip im Sinne dieser Anmeldung trägt. Der Chipträger hat im Regelfall ähnliche oder kleinere Abmessungen wie eine Chipkarte.

Nach einer weiteren vorteilhaften Ausgestaltung der Erfindung wird zum Nachweis der Berechtigung beim Abrufen eines Referenzdatensatzes ein Paßwort, ein Name oder eine PIN eingegeben.

Nach einer weiteren vorteilhaften Ausgestaltung der Erfindung werden an Hand der genetischen Informationen der Referenzdatensätze Paarungsvorschläge für Züchtungen ermittelt. Hierzu können aus den Referenzdatensätzen geeignete männliche und weibliche Tiere ausgewählt werden, um ein gewünschtes Zuchtergebnis zu erzielen. Die in Form von Referenzdatensätzen vorliegenden Daten erleichtern die Auswahl unter einer größeren Gesamtheit von Tieren.

Nach einer weiteren vorteilhaften Ausgestaltung der Erfindung wird das die Referenzdaten und gegebenenfalls Zugriffsberechtigungen enthaltende Speichermedium in eine vom Tier getragene Erkennungsmarke integriert. Dies erleichtert das Zuordnen der Tiere.

Nach einer weiteren vorteilhaften Ausgestaltung der Erfindung wird die genetische Information der Referenzdatensätze durch eine mit dem Speichermedium verbundene Ausgabevorrichtung in Form eines Säulendiagramms angezeigt. An Hand dieses Diagramms können die genetischen Informationen optisch schnell und einfach erfaßt und mit denjenigen anderen Tiere verglichen werden.

Nachfolgend werden einige Aspekte der Erfindung im einzelnen noch näher erläutert.

Ein Problem, welches häufig in Zusammenhang mit der Identifizierung von Tieren auftritt, ist, daß Unterlagen betreffend das Tier ausgetauscht werden und eine eindeutige Zuordnung des Inhalts der Unterlagen zu dem Tier nicht ohne weiteres möglich ist. Eine sichere Zuordnung des Schlüssels zu dem jeweiligen Tier bzw. zu berechtigten Personen ist ein großes Problem bei der Absicherung von identifizierenden Informationen gegenüber Fälschungen. Die Erfindung stellt insoweit ein Verfahren zur Verfügung, das eine sichere individualisierende Information (z. B. den genetischen Fingerabdruck) in die Erzeugung der Schlüssel integriert, sei es in die Schlüssel an sich oder in die Zertifikate, welche die von einer Zertifizierungsstelle zertifizierten Schlüssel bestimmten Personen bzw. Tieren zuordnen.

Gemäß einer bevorzugten Ausführungsform sieht die Erfindung zur Lösung dieses Problems vor, daß die tierbezogenen Daten auf dem Datenträger entweder selbst mit einem Schlüssel verschlüsselt sind, der in einer eindeutigen Beziehung zu einer das Tier eindeutig identifizierenden genetischen Information steht, oder daß eine verifizierende Information, welche weitere ursprünglich abgespeicherte Informationen, die nicht verschlüsselt sein müssen, nicht umkehrbar eindeutig identifiziert, mit einem solchem Code verschlüsselt ist. Derartige verifizierende Informationen lassen sich durch sogenannte Einwegfunktionen, auch Hash-Funktionen genannt, generieren. Wird nach dem Verschlüsseln die besagte weitere unverschlüsselte Information auf dem Datenträger manipuliert, läßt sich dies durch einen Vergleich zwischen dem codiert abgespeicherten Wert der Einwegfunktion und dem Wert feststellen, der sich ergibt, wenn die Einwegfunktion auf die tatsächlich auf dem Datenträger abgespeicherten Daten angewandt wird. Stimmen die beiden Werte nicht überein, sind die Daten verändert worden oder es wurde der falsche Schlüssel zum Entschlüsseln verwendet.

Eine genetische Information, welche ein Tier oder einen Organismus eindeutig identifiziert, läßt sich beispielsweise mit dem sogenannten Mikrosatellitenverfahren gewinnen. Bei diesem Verfahren wird ausgenutzt, daß in bestimmten Genomregionen eine bestimmte Basensequenz, z. B. CA, sich mit einer individuell unterschiedlichen Anzahl von Wiederholungen wiederholt. Diese Bereiche sind flankiert von stabilen Genomregionen, die als Zielsequenz für die Primerbindung bei einer Polymerase-Kettenreaktion (PCR) dienen. Wird die Anzahl dieser Wiederholungen in ausreichend vielen entsprechenden Genomregionen bestimmt, ist die Menge dieser Wiederholungen insgesamt spezifisch für das individuelle Tier bzw. den individuellen Organismus.

Legt man nun eine bestimmte Reihenfolge der Genomregionen, in denen diese Wiederholungen bestimmt werden, fest und ordnet Zahlen, die der Anzahl dieser Wiederholungen entsprechen, entsprechend dieser Reihenfolge an, ergibt sich daraus eine Ziffernfolge, die ebenfalls spezifisch für das konkrete Individuum ist.

Ein anderes Verfahren zur Darstellung individueller genetischer Information nutzt die Polymorphismen an einzelnen Nukeotidpositionen des Genoms. Das SNP (single nucleotide polymorphisms) -Verfahren liefert einen Datensatz, in dem für jede der untersuchten Genompositionen die Aussage 1 (= Ergebnis 1 z. B. entspricht dem Populationswert) oder 0 (= Ergebnis 2, z. B. abweichender Wert) erhalten wird. In ihrer Gesamtheit ergeben die Untersuchungsergebnisse einen binären Zahlenwert (z. B. 011100010100001111101010). Für eine sichere Individualisierung müssen ca. 40 Genompositionen untersucht werden. Gegenwärtig sind weder beim Menschen noch bei anderen Organismen Standards definiert, welche die zu untersuchenden Positionen benennen. Für die Gewinnung der SNP-Informationen stehen verschiedene Verfahren zur Verfügung, welche zunehmend in Form von DNA-Chips automatisiert werden, wodurch ein hoher Probendurchsatz möglich wird. Beispiele der unterschiedlichen Ansätze sind das Verankern von Oligonukleotiden, die eine spezifische Position differenzieren, auf Chips. Eine andere Technik sieht vor, die polymorphen PCR-Produkte anhand ihres Molekulargewichtes zu unterscheiden. (Internationales Technologieforum 99, 23./24. Juni 1999, ICM Internationales Congress Center, Neue Messe München).

Die meisten Verschlüsselungsalgorithmen gehen von einer Zufallszahl aus, aufgrund derer dann der Schlüssel gebildet wird. Ersetzt man nun diese Zufallszahl durch eine in der vorangehenden Weise aus der genetischen Information gewonnene, für das Individuum spezifische Ziffernfolge, erhält man einen Verschlüsselungscode, der spezifisch für das betreffende Individuum ist. Allgemein kann zur Generierung des Schlüssels jede digitalisierte, vorzugsweise genetische Information verwendet werden, welche das Tier eindeutig identifiziert.

Erfindungsgemäß kann man dadurch, daß dem Tier eine Probe entnommen wird, die entsprechende genetische Information bestimmt wird und überprüft wird, ob der dieser Information entsprechende Schlüssel der Schlüssel zum Entschlüsseln der codierten Daten ist, überprüfen, ob das in Rede stehende Tier den abgespeicherten Daten entspricht. Läßt sich die verschlüsselte Information nicht entschlüsseln oder stimmt der gespeicherte Wert einer Einwegfunktion, da der verkehrte Schlüssel angewandt wurde, nicht mit den restlichen Daten, wie vorangehend beschrieben, überein, besteht der Verdacht auf eine Manipulation der Daten bzw. einen Austausch des Tieres. Auf diese Weise kann ausgeschlossen werden, daß das Tier, auf das sich die Daten beziehen, ausgetauscht worden ist.

Ein weiteres Problem besteht darin, daß die gespeicherten Daten auf dem Datenträger oder während des Transports über das Internet verfälscht werden können. Dieses Risiko läßt sich dadurch verringern, daß der Personenkreis, der Zugang zu dem Schlüssel bzw. zu der Zuordnung des Schlüssels zu der genetischen Information hat, beschränkt und kontrolliert wird. Man kann auch so vorgehen, daß der verschlüsselte Teil der Daten an eine vertrauenswürdige Zentralstelle zum Entschlüsseln geschickt wird, die das entschlüsselte Ergebnis zurückübermittelt, ohne den zur Entschlüsselung erforderlichen Schlüssel herauszugeben, und die gegebenenfalls auch die Authentizität der Daten bzw. die Zuordnung des Tiers zu den gespeicherten Daten überprüft.

Dieses Verfahren ist jedoch umständlich und gibt keine Sicherheit, daß die zwischen der vertrauenswürdigen Stelle und einem Benutzer ausgetauschten Informationen unverfälscht bleiben. Weiterhin ist bei diesem Vorgehen wichtig, daß der Schlüssel selbst dem Besitzer des Tieres nach Möglichkeit nicht bekannt wird, da ansonsten die Gefahr von Fälschung der Daten mit dem richtigen Schlüssel besteht. Es wäre auch wünschenswert, daß ein Besitzer direkt anhand von genetischen Informationen überprüfen kann, ob das in Rede stehende Tier den abgespeicherten Daten entspricht.

Diese Probleme lassen sich dadurch umgehen, daß ein asymmetrisches Schlüsselpaar verwendet wird, wobei der öffentliche Schlüssel in einer vorbestimmten Beziehung zu der das Tier identifizierenden genetischen Information steht, die dem Benutzer bekannt sein kann oder von ihm direkt überprüft werden kann, während der private Schlüssel, mit dem die Daten verschlüsselt sind, nur derjenigen Person bzw. derjenigen Stelle bekannt oder bei ihr verfügbar ist, welche die Daten auf den Datenträger geschrieben hat bzw. hierzu berechtigt ist.

Asymmetrische Schlüssel sind in der Datentechnik allgemein bekannt und bilden unter anderem die Grundlage für die digitale Signatur. Hinsichtlich Einzelheiten betreffend die Verschlüsselung von Daten und anderen Aspekte der Datensicherheit, insbesondere auch Einwegoder Hash-Funktionen, wird z. B. auf M. Raepple, "Sicherheitskonzepte für das Internet", Heidelberg 1998 oder auf RSA Laboratories, "Answers to Frequently Asked Questions About Todays's Cryptography", Version 3.0, verwiesen.

Nachfolgend wird ein Beispiel beschrieben, wie sich ein asymmetrischer RSA-Code auf der Grundlage einer genetischen Information erzeugen läßt.

Ein RSA-Code kann wie folgt erzeugt werden:
- man nehme zwei große Primzahlen p und q,
- man bildet deren Produkt n = p q,
- man wähle eine Zahl e, die kleiner als n und teilerfremd zu p - 1 und q - 1 ist,
- man finde eine Zahl d so, daß (e · d) - 1 durch (p - 1 ) · (q - 1) teilbar ist.

Das Wertepaar (n, e) bildet den öffentlichen Schlüssel und das Paar (n, d) bildet den privaten Schlüssel. Die Faktoren p und q werden vernichtet oder mit dem privaten Schlüssel zusammen sicher aufbewahrt.

Zum Chiffrieren einer Nachricht m mit dem öffentlichen Schlüssel wird m modular entsprechend der Vorschrift c = m^{e} mod n potenziert. Zum Dechiffrieren wird die chiffrierte Nachricht c auf der Grundlage des privaten Schlüssels entsprechend der Vorschrift c^{d} mod n potenziert. Der RSA-Schlüssel ist gerade so konstruiert, daß sich dann genau wieder die ursprüngliche Nachricht m ergibt. Umgekehrt kann auch nach den gleichen Vorschriften zunächst mit dem privaten Schlüssel chiffriert und dann mit dem öffentlichen Schlüssel dechiffriert werden.

Zur Generierung eines tierspezifischen Schlüsselpaares kann man beispielsweise bei dem RSA-Algorithmus die aus der genetischen Information bestimmte Zahl gleich der Zahl e sezten, wobei nach Faktorisierung von e Primzahlen p und q gefunden werden, für die gilt, daß p - 1 und q - 1 teilerfremd zu e sind. Entsprechend dem RSA-Algorithmus wird dann die Zahl d bestimmt, so daß der öffentliche Schlüssel als einen Parameter die Zahl e enthält, die der vorangehend genannten genetischen Information entspricht. Wird nun eine Information in dem Datensatz, beispielsweise das Ergebnis einer Hash-Funktion, mit dem privaten Schlüssel, der nur dem Besitzer des Tiers, einer vertrauenswürdigen Stelle oder dergleichen zugänglich ist, verschlüsselt, so kann durch eine erfolgreiche Entschlüsselung mit dem öffentlichen Schlüssel nicht nur verifiziert werden, daß die gespeicherte Information sich tatsächlich auf das in Rede stehende Tier bezieht (was bei dem vorliegenden Beispiel durch einen Vergleich von e mit einer direkt von dem Tier gewonnenen genetischen Information möglich ist), sondern es kann auch, genau wie bei einer digitalen Signatur, verifiziert werden, wer die Verschlüsselung vorgenommen hat.

Man beachte in diesem Zusammenhang, daß der zweite Parameter des öffentlichen und privaten Schlüssels, n, bei dem vorangehend genannten Beispiel nicht eindeutig festgelegt ist. Dementsprechend ist es möglich, mehrere Schlüssel zu generieren, die in dem vorangehend genannten Sinn für das Tier spezifisch sind, aber zu verschiedenen Personen gehören. Dies ermöglicht, daß verschiedene Personen, deren Authentizität unmittelbar überprüft werden kann, tierbezogene Daten auf den Datenträger schreiben können.

Eine weitere Möglichkeit, eine Authentifizierung der Person, welche Daten auf den Datenträger geschrieben hat, zu ermöglichen, besteht darin, daß die mit dem "tierspezifischen Code" codierte Nachricht noch einmal durch einen für den jeweiligen Benutzer spezifischen Code verschlüsselt wird oder daß der betreffende Benutzer in herkömmlicher Weise einen von ihm generierten Text digital signiert, indem er z. B. von dem generierten Text den Wert einer Hash-Funktion berechnet und diesen Wert mit seinem privaten Schlüssel aus einem asymmetrischen Schlüsselpaar verschlüsselt, wobei dieser chiffrierte Wert dann dem Datensatz hinzugefügt wird.

Um die Verifizierung und die Sicherheit des verwendeten Schlüssels noch weiter zu erhöhen, kann vorgesehen sein, daß der zur Entschlüsselung nötige Schlüssel auf einer Chipkarte implementiert wird. Dabei kann entweder vorgesehen sein, daß ein zur Entschlüsselung verwendeter Computer auf den in der Chipkarte sicher gespeicherten Schlüssel zugreift und diesen bei der Entschlüsselung verwendet oder, was bevorzugt ist, daß die Chipkarte selbst einen Prozessor zum Entschlüsseln von Nachrichten enthält, so daß ein verschlüsselter Text in die Karte eingegeben wird und ein Klartext ausgegeben wird, während der gespeicherte Code selbst nicht nach außen gelangt. Die Chipkarte kann auch zum Aufbewahren des privaten Schlüssels eines Benutzers vorgesehen sein und vorzugsweise einen Prozessor zum Verschlüsseln von Nachrichten mit dem privaten Schlüssel aufweisen.

Die Zuordnung der Chipkarte zu einem bestimmten Tier kann auf verschiedene Weise hergestellt werden.

Die einfachste Möglichkeit ist, den öffentlichen Schlüssel, beispielsweise wie vorangehend erläutert, so zu wählen, daß eine für das Tier spezifische genetische Information Bestandteil des öffentlichen Schlüssels ist, beispielsweise so, daß diese Information den Parameter e bildet. Dabei kann der öffentliche Schlüssel im einfachsten Fall auf der Chipkarte aufgedruckt sein oder durch eine einfache Ausgabeoperation aus dem Speicher der Chipkarte abgerufen werden.

Wenn der öffentliche Schlüssel selbst nicht jedermann bekannt werden soll, kann auch vorgesehen sein, daß eine Zuordnungsvorschrift zwischen der genetischen Information und dem öffentlichen Schlüssel in dem Chip der Chipkarte gespeichert ist und die Chipkarte so eingerichtet ist, daß eine von dem konkreten Tier gewonnene digitalisierte genetische Information eingegeben werden kann. Ein Prozessor in der Chipkarte berechnet dann aus der eingegebenen digitalisierten Information entsprechend der Zuordnungsvorschrift den Schlüssel und vergleicht diesen mit dem abgespeicherten Schlüssel. Liegt Übereinstimmung vor, gibt der Prozessor aus, daß die eingegebene Information dem abgespeicherten Schlüssel entspricht, und macht eine Ausgabe, daß die Chipkarte nicht dem entsprechenden Tier entspricht, wenn keine Übereinstimmung zwischen dem gespeicherten Schlüssel und dem von dem Prozessor bestimmten Schlüssel vorliegt. Vorzugsweise enthält die Chipkarte weiterhin im Klartext abrufbare Informationen, nach welchem Verfahren die genetischen Informationen, die dem in der Chipkarte abgespeicherten Schlüssel zugrunde liegen, gewonnen wurden und nach welchem Verfahren die gewonnenen Informationen digitalisiert werden. Ein Benutzer, der über die entsprechenden genetischen Informationen betreffend das in Rede stehende Tier verfügt, benötigt daher keine Zertifizierungsstelle oder dergleichen, um festzustellen, ob ein bestimmter Code oder eine bestimmte Chipkarte tatsächlich einem bestimmten Tier zugeordnet sind. Er kann dies selbst anhand der von dem Tier gewonnenen genetischen Informationen und den in der Chipkarte gespeicherten Informationen feststellen. Damit entfallen auch alle Probleme, die durch die Kommunikation zwischen einem Benutzer und einer Zertifizierungsstelle bei der digitalen Signatur entstehen. Durch die physikalische Verbindung von Schlüsseln und das Tier identifizierende Daten auf der Chipkarte wird die Manipulation der Kommunikation bzw. der für den sicheren Datentransport erforderlichen Komponenten verhindert.

Mit dem vorangehend beschriebenen Verfahren läßt sich ein System zur Zertifizierung und Verifizierung von Tieren auf elektronischer Basis einrichten. Die das Tier betreffenden Daten, z. B. Geburtsdatum, Besitzerdaten, Impfdaten usw., werden auf einem zentralen Rechner bei einer Zertifizierungsstelle gespeichert, der in üblicher Weise für privilegierte Benutzer zugänglich ist und bei dem ggf. ein Teil der gespeicherten Daten öffentlich zugänglich ist. Die entsprechenden Daten sind entweder mit dem privaten Schlüssel eines tierspezifischen asymmetrischen Schlüsselpaares, also eines Codes, der in der vorangehend erwähnten Weise auf eine genetische Information eines bestimmten Tieres zurückgeht, verschlüsselt oder es ist jedem Datensatz, mit diesem tierspezifischen privaten Schlüssel verschlüsselt, der Wert einer Einwegfunktion hinzugefügt, der sich ergibt, wenn diese Einwegfunktion auf den entsprechenden Datensatz angewendet wird. In beiden Fällen kann ein Benutzer, welcher die entsprechenden Daten liest oder über das Internet empfängt, verifizieren, daß diese unverfälscht sind und auf eine bestimmte Person zurückgehen.

Der Besitzer des Tieres erhält eine tierspezifische Chipkarte, auf welcher der tierspezifische asymmetrische Schlüssel abgespeichert ist, und zwar sowohl der private als auch der öffentliche Schlüssel. Die Chipkarte dient gleichzeitig als Tierausweiskarte, die ein Zertifikat der Zertifizierungsstelle enthält. Das Zertifikat enthält den Namen des Tieres, eine fortlaufende Seriennummer, den Namen des Ausstellers, den Namen des Antragstellers, den Namen derjenigen Stelle, welche die genetischen Informationen, die der Codierung zugrunde liegen ("genetischer Fingerabdruck"), gewonnen hat, das Verfahren, wie diese Informationen gewonnen wurden, die genetischen Informationen selbst und eine Gültigkeitsdauer sowie gegebenenfalls die Angabe des öffentlichen Schlüssels und/oder des Verschlüsselungsverfahrens. Dieses Zertifikat ist im Klartext oder mit einem öffentlichen Schlüssel der Zertifizierungsstelle aus dem Chip auslesbar. Gegebenenfalls kann das Zertifikat auch auf der Chipkarte aufgedruckt sein.

Um Zugriff auf die bei der Zertifizierungsstelle gespeicherten Daten zu erhalten, werden die genetischen Informationen und der öffentliche Schlüssel über ein Lesegerät aus der Chipkarte ausgelesen und zu der Zertifizierungsstelle übermittelt. Anhand der genetischen Information bestimmt der Rechner der Zertifizierungsstelle, auf welches Tier bezogen Daten freigegeben werden sollen. Anhand des öffentlichen Schlüssels überprüft der Rechner, ob der angemeldete Benutzer zum Lesen der Daten berechtigt ist. Es können auch andere Daten übermittelt werden, z. B. eine Seriennummer, welche das betreffende Tier angibt, anstelle der genetischen Information. Zusätzliche oder alternative Zugangssperren, z. B. Paßwörter, können ebenfalls vorgesehen sein.

Der Besitzer erhält eine Zugriffsberechtigung für diejenigen Teile der in dem Zentralrechner abgespeicherten Daten, die besitzerbezogen sind, z. B. den Aufzuchtort, Emährungsdaten oder dergleichen. Für andere Daten, beispielsweise auf das Geburtsdatum, den Herkunftsort oder dergleichen, erhält der Besitzer, obwohl er im Besitz des entsprechenden privaten Schlüssels ist, nur eine beschränkte Zugriffsberechtigung. In der Regel wird man ihm gestatten, diese Daten zu lesen, aber nicht, sie zu ändern oder zu löschen. Die Zugriffsberechtigung kann in herkömmlicher Weise durch die Vergabe von Lese- und Schreibrechten bei dem zentralen Rechner und/oder ein konventionelles Paßwort eingerichtet werden. Andere Zugriffskontrollmechanismen, z. B. Spracherkennung oder die Verwendung von biologischen Merkmalen der betreffenden Person (Fingerabdruck, Irisabtastung etc.) können ebenfalls verwendet werden. Als weitere Möglichkeit der Zugangskontrolle kann auch vorgesehen sein, daß ein Zugriff auf Daten nur dann gestattet wird, wenn der Benutzer eine digitale Signatur hinterlegt, also eine Nachricht, die mit einem privaten Schlüssel codiert ist, der dem Benutzer von einer Zertifizierungsstelle zugewiesen ist, welche die Zertifizierungsstelle für die Tierdaten sein kann, aber auch eine Zertifizierungsstelle entsprechend dem Gesetz zur digitalen Signatur sein kann.

Es kann auch vorgesehen sein, daß mit einer einzigen Chipkarte (Mastercard) der Zugriff auf Daten betreffend mehrere Tiere, z. B. für Züchter oder Verbände, ermöglicht wird, wobei vorzugsweise diese Mastercard nur die jeweiligen öffentlichen Schlüssel enthält, nicht jedoch die privaten Schlüssel, so daß der Inhaber dieser Mastercard zwar sämtliche die verschiedenen Tiere betreffenden Daten lesen kann, diese aber ohne die tierspezifische Karte, die vorangehend beschrieben wurde, nicht verändern kann.

Die Betreiber der Zertifizierungsstelle sind ebenfalls im Besitz des privaten und des öffentlichen tierspezifischen Codes und haben volle Zugriffsberechtigung für alle Datenteile.

Dritten Personen kann der Zugang zu den Daten ermöglicht werden, indem der Besitzer (oder die Zertifizierungsstelle) diesen entweder zeitlich begrenzt oder permanent das Lesen der Daten gestattet, beispielsweise durch Vergabe eines Paßworts, und diesen den öffentlichen tierspezifischen Schlüssel zur Verfügung stellt. Weiterhin kann bestimmten Benutzern, beispielsweise Tierärzten, gestattet sein, bestimmte Daten, z. B. Impfdaten, Untersuchtungsdaten usw., zu ändern oder neu zu schreiben, wobei diese Benutzer dann die von ihnen neu geschriebenen oder geänderten Daten mit einem für sie spezifischen privaten Schlüssel digital signieren, z. B. durch Verschlüsselung des Wertes einer entsprechenden Einwegfunktion. Wenn diese Daten geändert werden, erzeugt die Zertifizierungsstelle mit dem tierspezifischen privaten Schlüssel eine zweite Signatur in Form des codierten Wertes einer Einwegfunktion, um die Authentizität der Zuordnung der eingeschriebenen Daten zu dem entsprechenden Tier zu bestätigen.

Es kann jedoch auch vorgesehen sein, daß ein Dritter nur dann auf die Daten zugreifen kann und diese lesen und/oder ändern kann, wenn er gleichzeitig die tierspezifische Chipkarte des Besitzers durch Einschieben in ein entsprechendes Lesegerät zur Autorisierung verwendet. In diesem Fall kann er nur dann auf die bei der Zertifizierungsstelle gespeicherten Daten zugreifen, wenn ihm diese Chipkarte ausgehändigt worden ist und er somit von dem Besitzer autorisiert worden ist.

Bezug nehmend auf das Beispiel eines Tierarztes, welcher eine Schreibberechtigung für Daten bei der Zertifizierungsstelle hat, soll der Zugriff von Dritten noch näher erläutert werden.

Der Tierarzt verfügt über einen privaten und einen öffentlichen Schlüssel, die ihm von der Zertifizierungsstelle und oder nach dem Gesetz zur digitalen Signatur zugewiesen sind. In dem von der Zertifizierungsstelle eingerichteten elektronischen Register ist eine Datei ("Registerblatt") für Behandlungsdaten eingerichtet. Der Tierarzt erhält eine Leseberechtigung für die Stammdaten, wie Geburtsdatum, Abstammungsdatum etc. und eine Zugriffsberechtigung zum Schreiben und Lesen von Impfdaten und zum Schreiben von Behandlungsdaten, wobei das Recht zum Lesen von Behandlungsdaten, welche nicht auf seine Tätigkeit zurückgehen, beschränkt sein kann.

Bei einer Behandlung händigt der Tierbesitzer dem Tierarzt die dem Tier zugeordnete tierspezifische Chipkarte aus, der mit Hilfe dieser Karte eine Verbindung zu der Zertifizierungsstelle aufbaut. Das Auslesen der Zertifikatsinformationen und Übermitteln von auf der tierspezifischen Karte gespeicherten Daten, wie dem gespeicherten öffentlichen tierspezifischen Schlüssel und ein Paßwort, zu der Zertifizierungsstelle, eröffnet den Zugang zu den betreffend das konkrete Tier gespeicherten Daten bei der Zertifizierungsstelle. Zum Lesen bzw. Schreiben der Daten muß der Tierarzt sich noch einmal persönlich identifizieren. Dies kann dadurch erfolgen, daß Daten von einer dem Tierarzt zugeordneten Chipkarte übermittelt werden oder in dem Chipkartenlesegerät oder dem Computer des Tierarztes sicher abgespeicherte Daten automatisch zu der zentralen Stelle übermittelt werden. Bei der Kommunikation zwischen dem Tierarzt und der Zertifizierungsstelle können die üblichen Techniken einer sicheren Verbindung verwendet werden. Z. B. kann mit Hilfe eines asymmetrischen Schlüsselpaares ein für die Sitzung speziell generierter symmetrischer Sitzungsschlüssel ausgetauscht werden, mit welchem alle Kommunikationen zwischen dem Tierarzt und der Zertifizierungsstelle während der Sitzung verschlüsselt werden.

Wenn sowohl eine Authorisierung betreffend das Tier als auch eine Authorisierung des Tierarztes erfolgt ist, kann der Tierarzt die ihm zugänglichen Daten in dem Register der Zertifizierungsstelle lesen bzw., soweit gestattet, verändern. Der Tierarzt versieht die von ihm geänderten oder neu geschriebenen Daten mit einer digitalen Signatur.

Auch eine Kommunikation in umgekehrter Richtung, beispielsweise zur Überweisung von Krankendaten, ist möglich. Dabei wird die entsprechende Nachricht entweder mit dem tierspezifischen privaten Schlüssel oder mit dem privaten Schlüssel des Tierarztes bzw. dem öffentlichen Schlüssel des Empfängers verschlüsselt. Alternativ wird die Nachricht im Klartext übersandt und zum Überprüfen der Authentizität wird eine Signatur, z. B. der Wert einer auf die Nachricht angewandten Einwegfunktion, verschlüsselt mit dem tierspezifischen privaten Schlüssel oder mit dem privaten Schlüssel des Tierarztes, erzeugt und der Nachricht angehängt.

Das vorangehend beschriebene Verfahren kann z. B. zur Identifizierung von Tieren bei Zuchtschauen verwendet werden. Der Tierbesitzer übermittelt zur Anmeldung des Tieres die das Tier identifizierende genetische Information, die dem öffentlichen tierspezifischen Schlüssel, wie vorangehend erläutert, zugrunde liegt, sowie den öffentlichen tierspezifischen Schlüssel, der auf der Chipkarte angegeben ist, oder eine andere Information, welche die Chipkarte der genetischen Information zuordnet. Beim Eintreffen des Tieres auf der Zuchtschau wird das Tier anhand der übersandten genetischen Information identifiziert. Auf der Grundlage des auf der Chipkarte gespeicherten oder abgedruckten Zertifikats wird überprüft, daß der angegebene öffentliche Schlüssel tatsächlich zu der angegebenen genetischen Information gehört, so daß die authentische Zuordnung der Chipkarte zu dem vorgeführten Tier hergestellt wird. Mit der solchermaßen verifizierten Chipkarte kann dann auf die Daten bei der Zertifizierungsstelle zugegriffen werden. Können die Daten bei der Zertifizierungsstelle mit dem auf der Chipkarte abgespeicherten Schlüssel entschlüsselt werden, ist sichergestellt, daß das vorgeführte Tier den bei der Zertifizierungsstelle gespeicherten Daten entspricht.

In ähnlicher Weise kann auch bei geschäftlichen Transaktionen betreffend das Tier, z. B. bei Tierverkäufen, vorgegangen werden. Auch in diesem Fall wird der öffentliche Schlüssel zusammen mit der das Tier identifizierenden genetischen Information übermittelt. Anstelle des öffentlichen Schlüssels kann auch eine andere Information übermittelt werden, welche die eindeutige Zuordnung einer vorzuliegenden Chipkarte zu der übermittelten genetischen Information herstellt. Sofern die Chipkarte die Zuordnung der gespeicherten Daten, insbesondere des gespeicherten Codes, zu der genetischen Information selbsttätig überprüft, reicht auch die Angabe der genetischen Information allein zur Authentifizierung der Karte aus.

Verschiedene Abwandlungen der vorangehend beschriebenen Vorgehensweise sind möglich. Es können z. B. andere Verschlüsselungsverfahren verwendet werden. Zugriffsberechtigungen, insbesondere Lese- oder Schreibrechte können unterschiedlich geregelt sein.

Informationen betreffend die Gewinnung der genetischen Information, der Zuordnung dieser Information zu einem öffentlichen Schlüssel etc. müssen nicht auf einer Chipkarte gespeichert werden, sondern können auch auf andere Weise kommuniziert werden.

Das Verfahren kann als Internet-Marktplatz, z. B. zum elektronischen Tierhandel oder zur elektronischen Tierversteigerung, ausgebildet werden. Dabei werden bestimmte Informationen der Referenzdatensätze oder allgemeiner der bei der Zertifizierungsstelle gespeicherten Daten betreffend die registrierten Tiere und/oder Materialien über Suchfunktionen zugänglich gemacht. Der Marktplatz kann offen sein, wobei die Absicherung der Datenübertragung durch standardmäßige Verfahren erfolgen kann. Alternativ kann der Zugang zu den Informationen allgemein oder auch nur für bestimmte Informationen auf berechtigte Benutzer beschränkt sein.

Im Rahmen des Aufbaus einer genetischen Zertifizierungsstelle können spezifische genetische Informationen der Referenzdatensätze als elektronische oder geschriebene Zertifikate für die jeweiligen Tiere bzw. Materialien ausgegeben werden, insbesondere als Zertifikat für sonstige Eigenschaften und/oder Merkmale.

Schließlich kann das erfindungsgemäße Verfahren zum Aufbau einer standardisierten Tierdatenbank verwendet werden, bei welchem nicht mehr die genetische Information (der "genetische Fingerabdruck") die das Tier identifizierenden Daten bildet, sondern vielmehr der dieser Information zugeordnete Schlüssel. Die Verfahren, die derzeit zum Erstellen eines "genetischen Fingerabdrucks" verwendet werden, sind unterschiedlich, so daß ein und dasselbe Tier mehreren "genetischen Fingerabdrücken" entsprechen kann, je nach dem, welches Verfahren verwendet wurde. Dementsprechend ist es derzeit schwierig, anhand der genetischen Information verschiedene Datenbanken auf Daten zu durchsuchen, die sich auf dasselbe Tier beziehen. Im Rahmen der Erfindung ist das Verfahren zur Gewinnung des genetischen Fingerabdrucks unwichtig, solange jedem Tier nur ein einziger individuell zugeordneter Schlüssel (oder eine andere digitale Information) zugewiesen wird; primäres Suchkriterium ist der tierspezifische Code oder Schlüssel. Die eindeutige Verbindung zwischen Schlüssel und der spezifischen genetischen Information erfolgt durch ein Zertifikat, welches das Verfahren, mit welchem der genetische Fingerabdruck ermittelt wurde, und den zugeordneten Schlüssel benennt, wobei dieses Zertifikat stets zusammen mit dem Schlüssel verfügbar ist und entweder zusammen mit diesem gespeichert ist oder jederzeit über einen Server abrufbar ist.

## Patentansprüche

1. Verfahren zum Nachweis der Abstammung und/oder zur Identifizierung von Tieren oder von biologischem Material von Tieren und Organismen, welches die folgenden Schritte umfaßt:
- Speichern von Identifikationsdaten in Form einer durch einen symmetrischen oder asymmetrischen Schlüssel verschlüsselten Nachricht, welche in einer eindeutigen vorgegebenen Beziehung zu einer genetischen Information steht, welche ein Tier oder das biologische Material eindeutig identifiziert, auf einem Datenträger,
- Überprüfen der Identifikationsdaten daraufhin, ob diese in der vorgegebenen Beziehung zu der genetischen Information stehen.

2. Verfahren nach Anspruch 1, daß die genetischen Informationen von einem oder mehreren Tieren oder von biologischem Material von einem oder mehreren Tieren oder Organismen bestimmt und auf einem Speichermedium als Referenzdatensätze abgespeichert werden.

3. Verfahren nach Anspruch 1 oder 2, **dadurch gekennzeichnet, daß** auf dem Datenträger den Identifikationsdaten zugeordnet weitere Daten betreffend das zu identifizierende Tier bzw. das zu identifizierende biologische Material gespeichert sind.

4. Verfahren nach Anspruch 1 bis 3, **dadurch gekennzeichnet, daß** die Identifikationsdaten eine verschlüsselte Nachricht enthalten, welche mit einem dem individuellen Tier oder Material eindeutig zugeordneten Code verschlüsselt ist.

5. Verfahren nach Anspruch 4, **dadurch gekennzeichnet, daß** die verschlüsselte Nachricht den Wert einer Einwegfunktion (Hash) enthält, der sich ergibt, wenn diese Einwegfunktion auf weitere auf dem Datenträger gespeicherte Daten betreffend das zu identifizierende Tier bzw. das zu identifizierende biologische Material angewendet wird.

6. Verfahren nach einem Ansprüche 1 bis 5, **dadurch gekennzeichnet, daß** eine verschlüsselte Nachricht eine das Tier bzw. das Material eindeutig identifizierende genetische Information umfaßt.

7. Verfahren nach einem der Ansprüche 3 bis 6, **dadurch gekennzeichnet, daß** die Identifikationsdaten verschlüsselte Daten betreffend den Speicherort und/oder den Inhalt von weiteren Daten betreffend das den Identifikationsdaten zugeordneten Tiers umfassen.

8. Verfahren nach einem der Ansprüche 4 bis 7, **dadurch gekennzeichnet, daß** die Identifikationsdaten eine Nachricht umfassen, die mit einem Code verschlüsselt wird, welcher auf der Grundlage einer Ziffemfolge in einer vorbestimmten eindeutigen Weise generiert ist, welche einer genetischen Information, welche das Tier bzw. das Material eindeutig identifiziert, eindeutig zugeordnet ist.

9. Verfahren nach Anspruch 8, **dadurch gekennzeichnet, daß** die Ziffernfolge zumindest einen Teil des Codes bildet.

10. Verfahren nach Anspruch 8 oder 9, **dadurch gekennzeichnet, daß** der Schlüssel ein symmetrischer Schlüssel ist.

11. Verfahren nach Anspruch 8 oder 9, **dadurch gekennzeichnet, daß** die Nachricht auf der Grundlage des privaten Schlüssels eines asymmetrischen Schlüsselpaares verschlüsselt ist, wobei zumindest ein Teil des öffentlichen Schlüssels in einer vorgegebenen Beziehung zu der das Tier bzw. das Material identifizierenden genetischen Information steht.

12. Verfahren nach Anspruch 11, daß der öffentliche Schlüssel aus einem für das Tier bzw. das Material spezifischen Anteil und einem benutzerspezifischen Anteil besteht.

13. Verfahren nach einem der Ansprüche 8 bis 12, **dadurch gekennzeichnet, daß** die identifizierenden Daten zusätzlich mit einem benutzerspezifischen Schlüssel verschlüsselt werden.

14. Verfahren nach einem der Ansprüche 8 bis 13, **dadurch gekennzeichnet, daß** zumindest ein Teil der Daten auf dem Datenträger, welche den Identifikationsdaten zugeordnet sind, mit einem Code verschlüsselt sind, der verschieden von dem Code ist, mit welchem die Identifikationsdaten verschlüsselt sind.

15. Verfahren nach einem der Ansprüche 8 bis 14, **dadurch gekennzeichnet, daß** der Schlüssel zum Entschlüsseln der in den Identifikationsdaten enthaltenen Nachricht auf einem Träger eines Chips zum Kommunizieren mit einer Datenverarbeitungsanlage über eine Schnittstelle, insbesondere auf einer Chipkarte, gespeichert ist.

16. Verfahren nach Anspruch 15, **dadurch gekennzeichnet, daß** der Chip eine Einrichtung zum Entschlüsseln von Nachrichten aufweist.

17. Verfahren nach Anspruch 15 oder 16, **dadurch gekennzeichnet, daß** der die Nachricht der Identifikationsdaten codierende Schlüssel ein asymmetrischer Schlüssel ist, der zugehörige private Schlüssel auf dem Chip gespeichert ist und der Chip eine Einrichtung zum Verschlüsseln von Nachrichten mit dem privaten Schlüssel aufweist.

18. Verfahren nach einem der Ansprüche 15 bis 17, **dadurch gekennzeichnet, daß** der Chip eine Schnittstelle zum Eingeben von digitalisierter genetischer Information und eine Einrichtung zum Überprüfen der Zuordnung des gespeicherten Codes zu einer eingegebenen digitalisierten genetischen Information enthält.

19. Verfahren nach Anspruch 18, **dadurch gekennzeichnet, daß** die Vergleichseinrichtung die eingegebene digitalisierte genetische Information mit einem abgespeicherten Wert für diese Information vergleicht und ein Ausgangssignal abgibt, welches anzeigt, ob eine Übereinstimmung vorliegt oder nicht.

20. Verfahren nach Anspruch 18, **dadurch gekennzeichnet, daß** die Vergleichseinrichtung auf der Grundlage der eingegebenen digitalisierten genetischen Information und einer abgespeicherten Zuordnung einer digitalisierten genetischen Information, welche das Tier bzw. das Material eindeutig identifiziert, zu dem abgespeicherten Schlüssel einen der eingegebenen Information zugeordneten Schlüssel bestimmt, den so bestimmten Schlüssel mit dem abgespeicherten Schlüssel vergleicht und ein Ausgangssignal abgibt, welches anzeigt, ob der aufgrund der Eingabe bestimmte Schlüssel mit dem abgespeicherten Schlüssel übereinstimmt oder nicht.

21. Verfahren nach einem der Ansprüche 15 bis 20, **dadurch gekennzeichnet, daß** in dem Chip einen oder mehrere Benutzer identifizierende Informationen gespeichert sind und die Entschlüsselungs- bzw. Verschlüsselungseinrichtung nur dann aktiviert wird, wenn über eine Eingabeeinrichtung eine für einen Benutzer als Identifizierung gespeicherte Information eingegeben wird.

22. Verfahren nach einem der Ansprüche 8 bis 21, **dadurch gekennzeichnet, daß** der Code zum Entschlüsseln von codierter Information, die in den Identifikationsdaten enthalten ist, in einem zentralen Rechner gespeichert ist.

23. Verfahren nach Anspruch 22, **dadurch gekennzeichnet, daß** der Rechner aufgrund einer eingegebenen oder vorgegebenen genetischen Information den zugehörigen Schlüssel bestimmt und diesen Schlüssel auf die Identifikationsdaten anwendet.

24. Verfahren nach Anspruch 23, **dadurch gekennzeichnet, daß** der zentrale Rechner nach der Entschlüsselung überprüft, ob vorgegebene Zeichenfolgen in dem entschlüsselten Klartext vorhanden sind und ein entsprechendes Ausgangssignal an einen Benutzer abgibt.

25. Verfahren nach Anspruch 23 oder 24, **dadurch gekennzeichnet, daß** die auf dem Datenträger gespeicherte Information sowie gegebenenfalls eine vorbestimmte, das Tier bzw. das Material eindeutig identifizierende genetische Information zu dem zentralen Rechner übermittelt wird,

26. Verfahren nach einem der Ansprüche 1 bis 24, **dadurch gekennzeichnet, daß** der Datenträger mit den auf das Tier bzw. das Material bezogenen Daten auf einem zentralen Rechner installiert ist.

27. Verfahren nach Anspruch 26, **dadurch gekennzeichnet, daß** zumindest ein Teil der Daten zugriffsgeschützt ist und die Zugriffsberechtigung für verschiedene Benutzer des zentralen Rechners verschieden ist.

28. Verfahren nach Anspruch 27, **dadurch gekennzeichnet, daß** für einen Teil der Benutzer ein Zugriff auf zumindest einen Teil der gespeicherten Daten nur dann möglich ist, wenn gleichzeitig ein vorbestimmter weiterer Benutzer bei dem zentralen Rechner angemeldet ist.

29. Verfahren nach einem der Ansprüche 26 bis 28, **dadurch gekennzeichnet, daß** ein Zugriff auf zumindest einen Teil der gespeicherten Daten nur dann möglich ist, wenn der Rechner anhand der auf einem Chip, insbesondere auf einer Chipkarte, gespeicherten Daten die Zugriffsberechtigung überprüft hat.

30. Verfahren nach einem der Ansprüche 27 bis 29, **dadurch gekennzeichnet, daß** der Rechner so eingerichtet ist, daß ein Schreiben von Benutzern in die abgespeicherten, auf das Tier bzw. das Material bezogenen Daten nur zusammen mit einer digitalen Signatur des Benutzers möglich ist.

31. Verfahren nach einem der Ansprüche 26 bis 30, **dadurch gekennzeichnet, daß** ein tierspezifisches Paar von asymmetrischen Schlüsseln zum Austausch eines Sitzungsschlüssels für die Kommunikation eines Benutzers mit dem zentralen Rechner verwendet wird.

32. Verfahren zum Generieren von Daten, welche zu einem individuellen Tier oder biologischen Material eines Tiers oder organismus nachprüfbar in einer eindeutigen Beziehung stehen, welches umfaßt:
- Erzeugen von Identifikationsdaten in Form einer durch einer symmetrischen oder asymmetrischen Schlüssel verschlüsselten Nachricht, welche in einer eindeutigen vorgegebenen Bezichung zu einer genetischen Information steht, welche ein Tier oder das biologische Material eindeutig identifiziert,
- Speichern der Identifikationsdaten auf einem Datenträger.

33. Verfahren nach Anspruch 32, **dadurch gekennzeichnet, daß** die Identifikationsdaten eine verschlüsselte Nachricht enthalten, welche mit einem dem individuellen Tier oder biologischen Material eindeutig zugeordneten Schlüssel verschlüsselt ist.

34. Verfahren nach Anspruch 33, **dadurch gekennzeichnet, daß** die verschlüsselte Nachricht den Wert einer Einwegfunktion (Hash) enthält, der sich ergibt, wenn diese Einwegfunktion auf weitere auf dem Datenträger gespeicherte Daten betreffend das zu identifizierende Tier bzw. dem zu identifizierenden biologischen Material angewendet wird.

35. Verfahren nach einem der Ansprüche 32 bis 34, **dadurch gekennzeichnet, daß** die Identifikationsdaten eine Nachricht umfassen, die mit einem Code verschlüsselt ist, welcher auf der Grundlage einer Ziffernfolge in einer vorbestimmten eindeutigen Weise generiert ist, welche einer genetischen Information, welche das Tier bzw. das Material eindeutig identifiziert, eindeutig zugeordnet ist.

36. Verfahren nach Anspruch 35, **dadurch gekennzeichnet, daß** der Schlüssel ein symmetrischer Schlüssel ist.

37. Verfahren nach Anspruch 35, **dadurch gekennzeichnet, daß** die Information auf der Grundlage eines asymmetrischen Schlüsselpaares verschlüsselt ist, wobei zumindest ein Teil des öffentlichen Schlüssels in einer vorgegebenen Beziehung zu der genetischen Information steht.

38. Datenträger zur Durchführung eines Verfahrens nach einem der Ansprüche 1 bis 31, der zur Kommunikation zwischen einem Chip auf dem Datenträger und einem Rechner über eine Schnittstelle eingerichtet ist, insbesondere Chipkarte, **dadurch gekennzeichnet, daß** auf dem Chip ein Schlüssel gespeichert ist, der zu einer für das individuelle Tier oder biologische Material spezifischen genetischen Information in einer eindeutigen vorgegebenen Beziehung steht.

39. Chipträger nach Anspruch 38, **dadurch gekennzeichnet, daß** der Chip einen Prozessor zum Entschlüsseln von Nachrichten mit dem gespeicherten Schlüssel aufweist.

40. Chipkarte nach einem der Ansprüche 38 oder 39, **dadurch gekennzeichnet, daß** der Chip eine Schnittstelle zum Eingeben von digitalisierter genetischer Information und eine Vergleichseinrichtung zum Überprüfen der Zuordnung des gespeicherten Codes zu einer eingegebenen digitalisierten genetischen Information enthält.

41. Computersystem zur Durchführung eines Verfahrens nach einem der Ansprüche 1 bis 31, **gekennzeichnet durch** einen zentralen Rechner, welcher einen Datenträger aufweist, auf dem Identifikationsdaten gespeichert sind, die in einer eindeutigen vorgegebenen Beziehung zu einer genetischen Information stehen, welche ein Tier oder das biologische Material eindeutig identifiziert.

## Claims

1. Method for proving the pedigree and/or for the identification of animals or of biological material from animals and organisms, which comprises the following steps:
- storing on a data carrier identification data in the form of a message which has been encrypted by a symmetric or asymmetric key and which has an unambiguous and predetermined connection with genetic information unambiguously identifying an animal or the biological material,
- verifying the identification data with respect to whether said data have the predetermined connection with the genetic information.

2. Method according to Claim 1, **characterized in that** the genetic information of one or more animals or of biological material from one or more animals or organisms is determined and is stored as reference datasets on a storage medium.

3. Method according to Claim 1 or 2, **characterized in that** the data carrier holds further data which have been assigned to the identification data and which relate to the animal to be identified or the biological material to be identified.

4. Method according to one of Claims 1 to 3, **characterized in that** the identification data contain an encrypted message which has been encrypted using a code unambiguously assigned to the individual animal or material.

5. Method according to Claim 4, **characterized in that** the encrypted message contains the value of a one-way function (hash), which value is obtained when applying said one-way function to further data which are stored on the data carrier and which relate to the animal to be identified or the biological material to be identified.

6. Method according to one of Claims 1 to 5, **characterized in that** an encrypted message comprises genetic information unambiguously identifying the animal or the material.

7. Method according to one of Claims 3 to 6, **characterized in that** the identification data comprise encrypted data which relate to the storage location and/or the contents of further data which relate to the animal assigned to the identification data.

8. Method according to one of Claims 4 to 7, **characterized in that** the identification data comprise a message encrypted by a code which is generated in a predetermined unambiguous manner on the basis of a sequence of digits which has been unambiguously assigned to genetic information unambiguously identifying the animal or the material.

9. Method according to Claim 8, **characterized in that** the sequence of digits forms at least part of the code.

10. Method according to Claim 8 or 9, **characterized in that** the key is a symmetric key.

11. Method according to Claim 8 or 9, **characterized in that** the message has been encrypted on the basis of the private key of an asymmetric pair of keys, with the public key at least in part having a predetermined connection with the genetic information identifying the animal or the material.

12. Method according to Claim 11, **characterized in that** the public key comprises a part specific for the animal or the material and a user-specific part.

13. Method according to one of Claims 8 to 12, **characterized in that** the identification data are additionally encrypted using a user-specific key.

14. Method according to one of Claims 8 to 13, **characterized in that** the data on the data carrier, which have been assigned to the identification data, have at least in part been encrypted by a code which is different than the code used for encrypting the identification data.

15. Method according to one of Claims 8 to 14, **characterized in that** the key for decrypting the message contained in the identification data is stored on a carrier of a chip for communicating with a data processing system via an interface, in particular on a smartcard.

16. Method according to Claim 15, **characterized in that** the chip has a device for decrypting messages.

17. Method according to Claim 15 or 16, **characterized in that** the key encoding the message of the identification data is an asymmetric key, the corresponding private key is stored on the chip and the chip has a device for encrypting messages using the private key.

18. Method according to one of Claims 15 to 17, **characterized in that** the chip contains an interface for entering digitized genetic information and a device for verifying the assignment of the stored code to entered digitized genetic information.

19. Method according to Claims 18, **characterized in that** the comparing device compares the entered digitized genetic information with a stored value for this information and emits an output signal which indicates whether or not there is a match.

20. Method according to Claim 18, **characterized in that**, based on the entered digitized genetic information and a stored assignment to the stored key of digitized genetic information unambiguously identifying the animal or the material, the comparing device determines a key assigned to the entered information, compares the key determined in this way with the stored key and releases an output signal which indicates whether or not the key determined based on the input matches the stored key.

21. Method according to one of Claims 15 to 20, **characterized in that** the chip holds information identifying one or more users and the decrypting device or encrypting device is only activated when information stored for identifying a user is entered via an input device.

22. Method according to one of Claims 8 to 21, **characterized in that** the code for decrypting coded information contained in the identification data is stored on a central computer.

23. Method according to Claim 22, **characterized in that** the computer determines the corresponding key owing to entered or predetermined genetic information and applies said key to the identification data.

24. Method according to Claim 23, **characterized in that**, after decrypting, the central computer verifies whether predetermined sequences of characters are present in the decrypted text and releases a corresponding output signal to a user.

25. Method according to Claim 23 or 24, characterized and that the information stored on the data carrier and, where appropriate, predetermined genetic information unambiguously identifying the animal or the material are transferred to the central computer.

26. Method according to one of Claims 1 to 24, **characterized in that** the data carrier containing the data related to the animal or the material is stored on a central computer.

27. Method according to Claim 26, **characterized in that** at least in part the data are access-protected and that access authorization is different for different users of the central computer.

28. Method according to Claim 27, **characterized in that** a proportion of users can access at least part of the stored data only, if a predetermined further user is logged on to the central computer at the same time.

29. Method according to one of Claims 26 to 28, **characterized in that** access to at least part of the stored data is only possible, if the computer has verified access authorization using the data stored on a chip, in particular on a smartcard.

30. Method according to one of Claims 27 to 29, **characterized in that** the computer is set up such that users can write to the stored data related to the animal or the material only together with a digital signature of the user.

31. Method according to one of Claims 26 to 30, **characterized in that** an animal-specific pair of asymmetric keys is used for exchanging a session key for communication of a user with the central computer.

32. Method for generating data which are unambiguously and verifiably connected with an individual animal or a biological material of an animal or organism, which comprises:
- creating identification data in the form of a message which has been encrypted by a symmetric or asymmetric key and which has an unambiguous and predetermined connection with genetic information which unambiguously identifies an animal or the biological material,
- storing the identification data on a data carrier.

33. Method according to Claim 32, **characterized in that** the identification data contain an encrypted message which has been encrypted using a key unambiguously assigned to the individual animal or biological material.

34. Method according to Claim 33, **characterized in that** the encrypted message contains the value of a one-way function (hash), which value is obtained when applying said one-way function to further data which are stored on the data carrier and which relate to the animal to be identified or the biological material to be identified.

35. Method according to one of Claims 32 to 34, **characterized in that** the identification data comprise a message encrypted by a code which is generated in a predetermined unambiguous manner on the basis of a sequence of digits which has been unambiguously assigned to genetic information unambiguously identifying the animal or the material.

36. Method according to Claim 35, **characterized in that** the key is a symmetric key.

37. Method according to Claim 35, **characterized in that** the information has been encrypted on the basis of an asymmetric pair of keys, with the public key at least in part having a predetermined connection with the genetic information.

38. Data carrier for performing a method according to one of claims 1 to 31 which is set up for communication between a chip on the data carrier and a computer via an interface, in particular a smartcard, **characterized in that** the chip holds a key which has an unambiguous and predetermined connection with genetic information specific for the individual animal or biological material.

39. Chip carrier according to Claim 38, **characterized in that** the chip has a processor for decrypting messages using the stored key.

40. Smartcard according to one of Claims 38 or 39, **characterized in that** the chip contains an interface for entering digitized genetic information and a device for verifying the assignment of the stored code to entered digitized genetic information.

41. Computer system for carrying out a method according to one of Claims 1 to 31, **characterized by** a central computer having a data carrier which holds identification data which have an unambiguous and predetermined connection with genetic information unambiguously identifying an animal or the biological material.

## Revendications

1. Procédé de détermination de l'origine et/ou d'identification d'animaux ou de matière biologique d'animaux et d'organismes, qui comprend les étapes suivantes :
- mise en mémoire sur un support de données de données d'identification sous forme d'un message codé par un code symétrique ou asymétrique et qui est dans un rapport univoque fixé avec une information génétique qui identifie de manière univoque un animal ou la matière biologique,
- vérification des données d'identification pour savoir si celles-ci sont dans le rapport fixé avec l'information génétique.

2. Procédé selon la revendication 1, **caractérisé par le fait que** les informations génétiques d'un ou de plusieurs animaux ou de matière biologique d'un ou de plusieurs animaux ou organismes sont déterminées et mises en mémoire sur un support d'informations comme groupes de données de référence.

3. Procédé selon l'une des revendications 1 et 2, **caractérisé par le fait que** sur le support de données sont mises en mémoire d'autres données associées aux données d'identification et concernant l'animal ou la matière biologique à identifier.

4. Procédé selon l'une des revendications 1 à 3, **caractérisé par le fait que** les données d'identification contiennent un message codé qui est codé avec un code attribué de manière univoque à l'animal individuel ou la matière individuelle.

5. Procédé selon la revendication 4, **caractérisé par le fait que** le message codé contient la valeur d'une fonction à sens unique (hachage) qui est obtenue lorsque cette fonction à sens unique est appliquée à d'autres données mises en mémoire sur le support de données concernant l'animal ou la matière biologique à identifier.

6. Procédé selon l'une des revendications 1 à 5, **caractérisé par le fait qu'**un message codé comprend une information génétique qui identifie de manière univoque l'animal ou la matière.

7. Procédé selon l'une des revendications 3 et 6, **caractérisé par le fait que** les données d'identification comprennent des données codées concernant le lieu de mise en mémoire et/ou le contenu d'autres données concernant l'animal associé aux données d'identification.

8. Procédé selon l'une des revendications 4 à 7, **caractérisé par le fait que** les données d'identification comprennent un message qui est codé avec un code qui est généré sur la base d'une suite de chiffres d'une manière univoque déterminée qui est associée de manière univoque à une information génétique qui identifie de manière univoque l'animal ou la matière.

9. Procédé selon la revendication 8, **caractérisé par le fait que** la suite de chiffres forme au moins une partie du code.

10. Procédé selon l'une des revendications 8 et 9, **caractérisé par le fait que** le code est un code symétrique.

11. Procédé selon l'une des revendications 8 et 9, **caractérisé par le fait que** le message est codé sur la base du code privé d'une paire asymétrique de codes, au moins une partie du code public étant dans un rapport fixé avec l'information génétique qui identifie l'animal ou la matière.

12. Procédé selon la revendication 11, **caractérisé par le fait que** le code public est constitué d'une partie propre à l'animal ou à la matière et d'une partie propre à l'utilisateur.

13. Procédé selon l'une des revendications 8 à 12, **caractérisé par le fait que** les données identifiantes sont en plus codées avec un code propre à l'utilisateur.

14. Procédé selon l'une des revendications 8 à 13, **caractérisé par le fait qu'**au moins une partie des données sur le support de données qui sont associées aux données d'identification sont codées avec un code qui est différent du code avec lequel les données d'identification sont codées.

15. Procédé selon l'une des revendications 8 à 14, **caractérisé par le fait que** le code pour le décodage du message contenu dans les données d'identification est mis en mémoire sur un support d'une puce pour la communication avec une installation de traitement de l'information par l'intermédiaire d'une interface, en particulier sur une carte à puce.

16. Procédé selon la revendication 15, **caractérisé par le fait que** la puce présente un dispositif de décodage de messages.

17. Procédé selon l'une des revendications 15 et 16, **caractérisé par le fait que** le code qui code le message des données d'identification est un code asymétrique, le code privé correspondant est mis en mémoire sur la puce, et la puce présente un dispositif de codage de messages avec le code privé.

18. Procédé selon l'une des revendications 15 à 17, **caractérisé par le fait que** la puce contient une interface pour l'entrée d'information génétique numérisée et un dispositif de vérification de l'association du code en mémoire à une information génétique numérisée entrée.

19. Procédé selon la revendication 18, **caractérisé par le fait que** le dispositif de comparaison compare l'information génétique numérisée entrée avec une valeur mise en mémoire pour cette information et émet un signal de sortie qui indique s'il y a ou non une concordance.

20. Procédé selon la revendication 18, **caractérisé par le fait que** le dispositif de comparaison, sur la base de l'information génétique numérisée entrée et d'une association mise en mémoire d'une information génétique numérisée qui identifie de manière univoque l'animal ou la matière au code mis en mémoire, détermine un code attribué à l'information entrée, compare le code ainsi déterminé avec le code mis en mémoire et émet un signal de sortie qui indique si le code déterminé sur la base de l'entrée concorde ou non avec le code mis en mémoire.

21. Procédé selon l'une des revendications 15 à 20, **caractérisé par le fait que** dans la puce sont mises en mémoire des informations qui identifient un ou plusieurs utilisateurs, et le dispositif de décodage ou de codage n'est activé que lorsqu'est entrée par un dispositif d'entrée une information mise en mémoire comme identification pour un utilisateur.

22. Procédé selon l'une des revendications 8 à 21, **caractérisé par le fait que** le code pour le décodage d'information codée qui est contenue dans les données d'identification est mis en mémoire dans un calculateur central.

23. Procédé selon la revendication 22, **caractérisé par le fait que** le calculateur, sur la base d'une information génétique entrée ou fixée, détermine le code correspondant et applique ce code aux données d'identification.

24. Procédé selon la revendication 23, **caractérisé par le fait que** le calculateur central, après le décodage, vérifie si des suites de signes fixées existent dans le texte en clair décodé et envoie un signal de sortie correspondant à un utilisateur.

25. Procédé selon l'une des revendications 23 et 24, **caractérisé par le fait que** l'information mise en mémoire sur le support de données et éventuellement une information génétique déterminée identifiant de manière univoque l'animal ou la matière sont transmises au calculateur central.

26. Procédé selon l'une des revendications 1 à 24, **caractérisé par le fait que** le support de données avec les données relatives à l'animal ou à la matière est installé sur un calculateur central.

27. Procédé selon la revendication 26, **caractérisé par le fait qu'**au moins une partie des données sont à accès protégé et que l'autorisation d'accès est différente pour différents utilisateurs du calculateur central.

28. Procédé selon la revendication 27, **caractérisé par le fait que** pour une partie des utilisateurs, un accès à au moins une partie des données mises en mémoire n'est possible que lorsqu'en même temps un autre utilisateur déterminé est inscrit au calculateur central.

29. Procédé selon l'une des revendications 26 à 28, **caractérisé par le fait qu'**un accès à au moins une partie des données mises en mémoire n'est possible que lorsque le calculateur a vérifié l'autorisation d'accès à l'aide des données mises en mémoire sur une puce, en particulier sur une carte à puce.

30. Procédé selon l'une des revendications 27 à 29, **caractérisé par le fait que** le calculateur est agencé de façon qu'une écriture d'utilisateurs dans les données relatives à l'animal ou à la matière mises en mémoire ne soit possible que conjointement avec une signature numérique de l'utilisateur.

31. Procédé selon l'une des revendications 26 à 30, **caractérisé par le fait qu'**une paire propre à l'animal de codes asymétriques pour l'échange d'un code de séance est utilisée pour la communication d'un utilisateur avec le calculateur central.

32. Procédé de génération de données qui sont de manière vérifiable dans un rapport univoque avec un animal individuel ou bien un matériau biologique d'un animal ou d'un organisme, qui comprend :
- la production de données d'identification sous forme d'un message codé par un code symétrique ou asymétrique qui est dans un rapport univoque fixé avec une information génétique qui identifie de manière univoque un animal ou la matière biologique,
- la mise en mémoire des données d'identification sur un support de données.

33. Procédé selon la revendication 32, **caractérisé par le fait que** les données d'identification contiennent un message codé qui est codé avec un code attribué de manière univoque à l'animal individuel ou au matériau biologique.

34. Procédé selon la revendication 33, **caractérisé par le fait que** le message codé contient la valeur d'une fonction à sens unique (hachage) qui est obtenue lorsque cette fonction à sens unique est appliquée à d'autres données en mémoire sur le support de données concernant l'animal ou la matière biologique à identifier.

35. Procédé selon l'une des revendications 32 à 34, **caractérisé par le fait que** les données d'identification comprennent un message qui est codé avec un code qui est généré sur la base d'une suite de chiffres d'une manière univoque déterminée qui est associée de manière univoque à une information génétique qui identifie de manière univoque l'animal ou la matière.

36. Procédé selon la revendication 35, **caractérisé par le fait que** le code est un code symétrique.

37. Procédé selon la revendication 35, **caractérisé par le fait que** l'information est codée sur la base d'une paire de codes asymétrique, au-moins une partie du code public étant dans une rapport fixé avec l'information génétique.

38. Support de données pour l'exécution d'un procédé selon l'une des revendications 1 à 31, qui est agencé pour la communication entre une puce sur le support de données et un calculateur par l'intermédiaire d'une interface, en particulier carte à puce, **caractérisé par le fait que** sur la puce est mis en mémoire un code qui est dans un rapport univoque fixé avec une information génétique propre à l'animal individuel ou au matériau biologique.

39. Support de puce selon la revendication 38, **caractérisé par le fait que** la puce présente un processeur pour le décodage de messages avec le code en mémoire.

40. Carte à puce selon l'une des revendications 38 et 39, **caractérisée par le fait que** la puce contient une interface pour l'entrée d'information génétique numérisée et un dispositif de comparaison pour la vérification de l'attribution du code en mémoire à une information génétique numérisée entrée.

41. Système informatique pour l'exécution d'un procédé selon l'une des revendications 1 à 31, **caractérisé par** un calculateur central qui présente un support de données sur lequel sont mises en mémoire des données d'identification qui sont dans un rapport univoque fixé avec une information génétique qui identifie de manière univoque un animal ou la matière biologique.
